# FASCICULE DE BREVET EUROPEEN

(11) **EP 1 446 275 B1**
(45) Date de publication et mention de la délivrance du brevet: **29.06.2005**
(21) Numéro de dépôt: 02790369.9
(22) Date de dépôt: 13.11.2002
(51) Int. Cl.: B29C 33/30

(54) **MOULE POUR PNEUS**
REIFENFORM
TYRE MOULD

(30) Priorité: 13.11.2001 FR 0114679
(43) Date de publication de la demande: 18.08.2004
(73) Titulaire: Société de Technologie Michelin, 63000 Clermont-Ferrand Cedex 09 (FR); Michelin Recherche et Technique S.A., 1763 Granges-Paccot (CH)
(72) Inventeur: SOULALIOUX, Alain, 43100 Saint Beauzire (FR)
(74) Mandataire: Bauvir, Jacques
(86) Numéro de dépôt international: PCT/EP2002/012685
(87) Numéro de publication internationale: WO 2003/041932

(56) Documents cités:
- EP-A- 0 569 909
- EP-A- 0 860 260
- DE-C- 750 510

## Description

La présente invention concerne la fabrication des pneus. Plus précisément, elle se rapporte au moulage de la bande de roulement de ceux-ci.

La demande de brevet EP 0 569 909 décrit un type de moule dans lequel un très grand nombre de tôles disposées transversalement assurent le moulage de la bande de roulement. La surface de moulage est constituée par l'ensemble des tranches de chaque tôle. Les tôles, parce qu'orientées transversalement, s'étendent d'une épaule à l'autre du pneumatique. La demande de brevet EP 0 860 260 propose de maintenir l'orientation des tôles aussi parfaitement radiale que possible grâce à des tôles intermédiaires elles-mêmes engagées dans des fentes usinées dans un anneau de support, et de ce fait guidées rigoureusement.

Dans tous les cas de figure, l'ouverture et la fermeture de ce type de moule imposent de prévoir un déplacement coordonné, dans une direction radiale, de toutes les tôles formant ensemble une couronne périphérique feuilletée. Il se peut qu'apparaissent des frottements parasites contrariant les mouvements d'ouverture et de fermeture du moule. En outre, il peut s'avérer difficile de maintenir une répartition des jeux entre tôles aussi régulière que souhaitable. En conséquence, des bavures de moulage peuvent apparaître là où le jeu entre tôles est devenu supérieur au jeu nominal. Or le but poursuivi est de choisir le jeu nominal, comme expliqué dans le brevet EP 0 569 909, précisément pour éviter que le caoutchouc puisse fluer entre les tôles pendant toute la course de fermeture du moule.

L'objectif de l'invention est de pallier cet inconvénient, afin d'améliorer l'aptitude d'un moule de ce type à mouler des pneus d'une grande qualité d'aspect, notamment d'une qualité d'aspect qui reste constante après de nombreux cycles de moulage.

Un autre objectif de l'invention est de faciliter le montage d'un moule de ce type dont la conception même oblige à manipuler un très grand nombre de tôles avec le risque corollaire d'erreurs de montages.

L'invention propose un moule pour bande de roulement de pneu, comportant une couronne périphérique feuilletée pour le moulage de l'extérieur de la bande de roulement, ladite couronne périphérique feuilletée comprenant un empilage dans la direction circonférentielle d'une pluralité d'éléments moulants adjacents de faible épaisseur, lesdits éléments étant orientés sensiblement radialement, le moulage de ladite bande de roulement étant effectué par la tranche radialement intérieure desdits éléments, ladite tranche radialement intérieure ayant le profil voulu pour mouler une sculpture sur la bande de roulement, caractérisé en ce que la couronne est divisée en secteurs et en ce que, pour chaque secteur, les éléments appartenant à un secteur sont solidarisés entre eux pour former un bloc unitaire, chaque secteur pouvant être déplacé lors des mouvements d'ouverture et de fermeture du moule.

Dans le présent mémoire, lorsque l'on qualifie d'intérieure une pièce ou une surface, cela signifie qu'elle se situe vers le centre du moule, c'est-à-dire du côté de la cavité interne de moulage. Lorsque c'est le qualificatif extérieur qui est utilisé, cela signifie que la surface ou la pièce se situe plus loin de ladite cavité de moulage. Par exemple, s'agissant des tôles moulant la bande de roulement, la tranche intérieure est la surface de moulage, en contact avec le caoutchouc lors du moulage, alors que le côté ou la tranche extérieure est la surface en contact avec un support des tôles.

L'invention s'étend aussi à un procédé de fabrication d'un pneu utilisant un moule tel qu'il vient d'être décrit. Dans ce cas, un avantage l'utilisation de ce moule réside dans le fait qu'il contribue à une excellente éventation lors du moulage, par les interstices entre tôles.

Pour un exposé général sur le fonctionnement d'un tel moule, le lecteur est invité à consulter le brevet EP 0 569 909 susmentionné, et en particulier la partie de ce brevet relative à la figure 5.

Les figures suivantes illustrent l'invention et permettent d'en saisir tous les avantages.
La figure 1 est une perspective montrant deux secteurs espacés l'un de l'autre, comme ils pourraient l'être lorsque le moule est ouvert, conformes à l'invention dans son application à une première catégorie de moule, montrant une première variante de réalisation de l'invention.
La figure 2 est une coupe par un plan méridien du moule de l'invention dans son application à une première catégorie de moule, en position de moulage, c'est à dire moule fermé.
La figure 3 est une coupe par un plan perpendiculaire à l'axe, moule fermé, montrant la première variante de l'invention.
La figure 4 est une coupe par un plan perpendiculaire à l'axe, moule ouvert, montrant la première variante de l'invention.
La figure 5 est une coupe par un plan méridien du moule de l'invention dans son application à une deuxième catégorie de moule, en position de moulage, c'est à dire moule fermé.
La figure 6 montre une deuxième variante de réalisation de l'invention.
La figure 7 montre une troisième variante de réalisation de l'invention.
La figure 8 montre une quatrième variante de réalisation de l'invention.
La figure 9 est une vue selon « F » à la figure 8.
La figure 10 montre une cinquième variante de réalisation de l'invention.

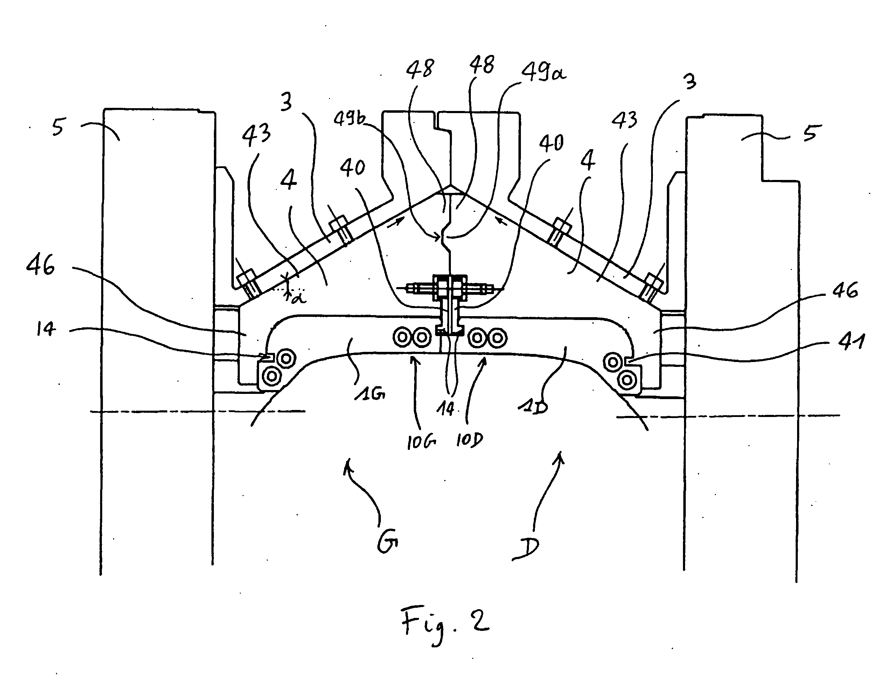

Dans ce mode de réalisation du moule, les éléments moulants de la couronne périphérique feuilletée, servant au moulage de la bande de roulement, sont des tôles 1 adjacentes dont l'épaisseur est comprise entre 0.1 mm (et de préférence 0.5 mm) et 5 mm (voir figure 2). Une couronne feuilletée comprend quelques milliers de tôles adjacentes. C'est une voie de réalisation très avantageuse des éléments de faible épaisseur caractéristiques de ce type de moule. L'épaisseur des tôles correspond à la résolution du moule pour définir la sculpture. On utilise par exemple des tôles d'acier ; elles sont avantageusement découpées toutes perpendiculairement à leur plan, selon un profil dicté par les motifs de sculpture qu'il faut réaliser. En découpant les tôles toujours perpendiculairement, certaines surfaces de la sculpture de la bande de roulement auront l'aspect de marches d'escalier, ce qui confère une apparence caractéristique de cette technologie. De préférence, les faces latérales des tôles ne sont pas parallèles, de façon à ce disposer naturellement en éventail lorsqu'on les rassemble et présenter entre elles un jeu sensiblement constant. On consultera à ce sujet les demandes de brevet EP 0 916 419 et EP 0 916 421.

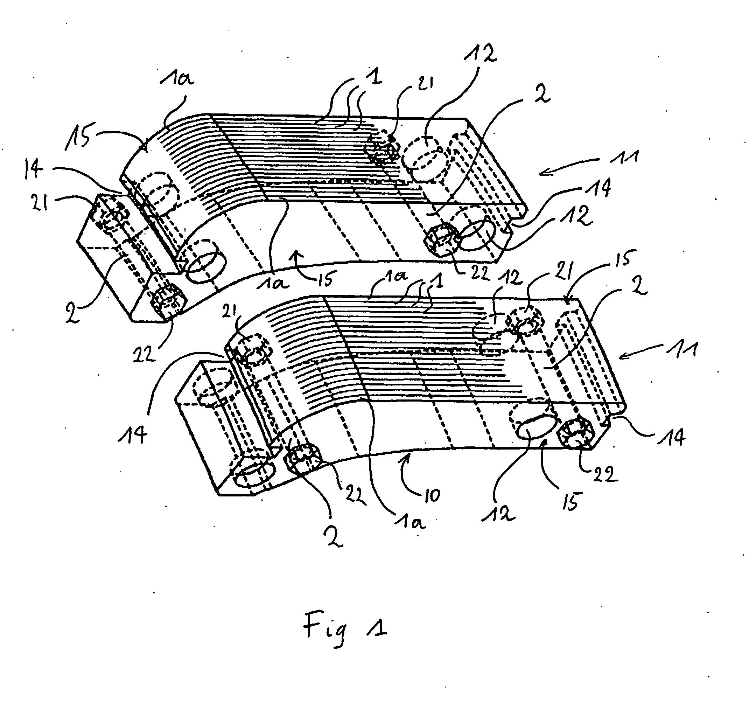

On voit à la figure 1 que la couronne est divisée en deux parties (G et D), et que la couronne comporte, transversalement, deux tôles distincts (1G et 1D) et adjacents appartenant chacun à l'une des parties. Les tôles ou éléments moulants sont désignés en général par la référence 1. Lorsque l'on veut désigner plus spécifiquement un élément ou une partie d'élément appartenant à la partie G, on utilise la référence 1G. Lorsque l'on veut désigner plus spécifiquement un élément ou une partie d'élément appartenant à la partie D, on utilise la référence 1D.

De préférence, au moins l'extrémité côté partie moulante, c'est côté tranche 10 des tôles 1, présente une épaisseur progressivement décroissante en se déplaçant radialement vers l'axe du moule. Chacune des tôles forme ainsi un léger coin, dont l'angle correspond sensiblement à la valeur obtenue en divisant 360° par le nombre de tôles sur un tour dans la couronne périphérique de moulage.

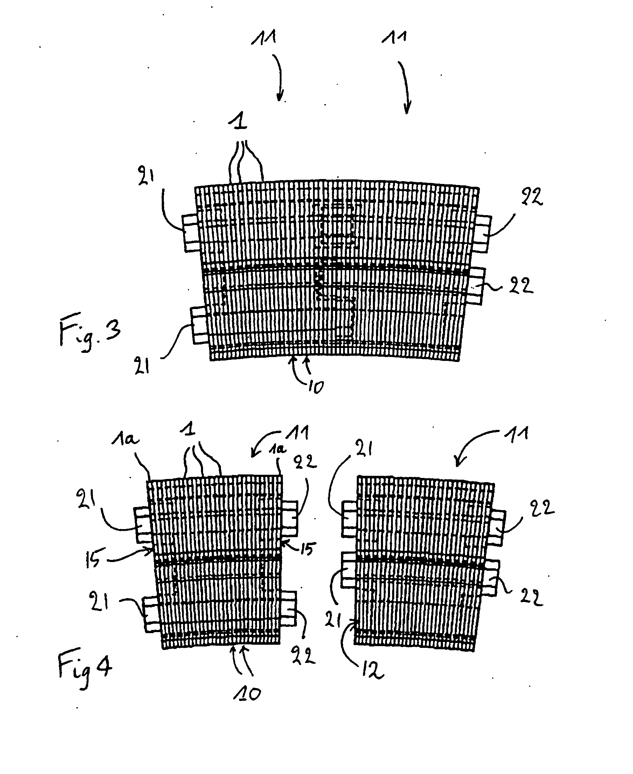

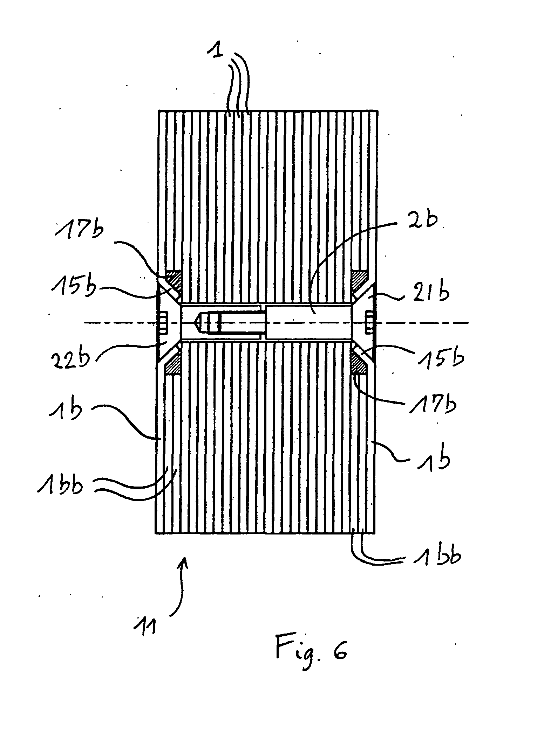

Pour former la couronne périphérique feuilletée, les tôles 1 sont groupées par secteurs 11, comme on le voit très bien notamment aux figures 1, 3 et 4. A cette fin, les tôles 1 d'un secteur 11 sont prises en tenaille par un dispositif de fixation comportant deux têtes faisant protubérance, tel qu'un boulon 2 (dont la tête forme une première tête 21) et un écrou 22 (formant la seconde tête). La tête 21 de chaque boulon 2 et l'écrou 22 appuient sur le flanc libre 15 de chacune des tôles 1a au bord de chaque secteur 11. Les dispositifs de fixation (ensembles boulon 2 et écrou 22) sont disposés en alternance d'un secteur à l'autre (voir figures 1 et 4), chaque secteur comportant des évidements 12 permettant de loger la tête des dispositifs de fixation des secteurs adjacents. Les évidements 12 sont obtenu en créant des perçages dans un nombre suffisant de tôles lors de la découpe desdites tôles. Cela permet d'amener les secteurs en contact (voir figure 3) pour former la couronne continue assurant le moulage de la bande de roulement. Au passage, signalons que la conséquence de ce type de moyen de maintien est qu'il y a nécessairement un nombre pair de secteurs pour mouler toute la bande de roulement, qu'il y ait ou non deux parties axiales G et D, mais ce n'est pas nécessairement le cas pour tous les types de moyens de maintien (voir par exemple figures 6, 7 et 8).

Le nombre d'éléments par secteur est typiquement compris entre 10 et 1000. Le nombre d'éléments est identique pour tous les secteurs, ou différent d'un secteur à l'autre.

Différents moyens peuvent être utilisés pour manipuler les groupes de tôles assemblées et maintenues en secteurs. Il s'agit ici d'organiser les mouvements de secteurs nécessaires pour ouvrir et fermer le moule. On peut par exemple fixer les tôles appartenant à un secteur sur un boîtier, chaque boîtier pouvant être déplacé lors des mouvements d'ouverture et de fermeture du moule.

On voit à la figure 2 que chaque secteur 11 est monté sur un boîtier 4 formant un support monobloc, pouvant être une pièce standard commune à un grand nombre de sculptures différentes. Même si un boîtier 4 est bien entendu adapté à la dimension d'un pneumatique, comme il n'est pas par lui-même moulant, il peut être utilisé pour plusieurs sculptures différentes et n'est donc pas spécifique à un seul pneumatique. Pour réaliser cette fixation, on découpe les tôles de façon à obtenir des rainures 14 qui sont engagées sur une protubérance 41 aménagée d'un côté sur le boîtier 4, le secteur étant immobilisé par une bride 40, également en prise dans une autre rainure 14 de chaque tôle et vissée sur le boîtier 4. Ainsi, les tôles 1 appartenant à un secteur 11 sont fixées sur un boîtier 4, chaque boîtier 4 pouvant alors être déplacé lors des mouvements d'ouverture et de fermeture du moule. Le nombre de tôles peut être identique pour tous les secteurs, ou bien les secteurs peuvent rassembler un nombre de tôles différent.

Chacun des boîtiers comporte, outre la protubérance 41, un bord latéral 46, un dos 43, et un bord central 48 destiné à venir en contact avec le bord central 48 correspondant du boîtier adjacent de l'autre partie. Notons encore la présence d'un ergot 49a sur chacun des boîtiers 4 de la partie D, engagé dans une découpure 49b réalisée sur chacun des boîtiers 4 de la partie G, afin de positionner avec grande précision les boîtiers 4 et donc les tôles 1 à la même hauteur radialement pendant toute la phase de fermeture du moule, surtout pendant la phase finale de fermeture.

Chacun des boîtiers 4 est monté sur une rampe 3 par l'intermédiaire d'une glissière (non représentée), afin de permettre un mouvement relatif symbolisé par une flèche tracée sur le dos du boîtier. Dans cet exemple, chacune des parties G et D du moule comporte un plateau 5 sur lequel est montée une rampe 3. La rampe 3 présente une portée tronconique 30 d'angle α, radialement intérieure, en contact avec lesdits boîtiers 4. Cette rampe permet de commander le mouvement des boîtiers 4 pour les amener dans leur position de fermeture, telle que représentée à la figure 2, ou pour les amener dans leur position d'ouverture (non représentée à la figure 2, mais correspondant pour les groupes de tôles à la figure 4), comme connu en soi pour les moules à secteurs en deux parties axiales.

Dans chaque secteur, les tôles 1 sont montées sur le boîtier en étant disposées toutes selon le même angle par rapport à la direction radiale. Dans cet exemple, les tôles sont disposées de façon méridienne. Autrement dit, lorsque l'on examine la couronne périphérique feuilletée en coupe selon un plan perpendiculaire à l'axe géométrique du moule (voir figure 3), les tôles sont disposées de façon à comprendre un rayon, et leur prolongement virtuel comprend l'axe géométrique du moule. Ceci n'est nullement limitatif et on peut admettre que les tôles soient quelque peu inclinées.

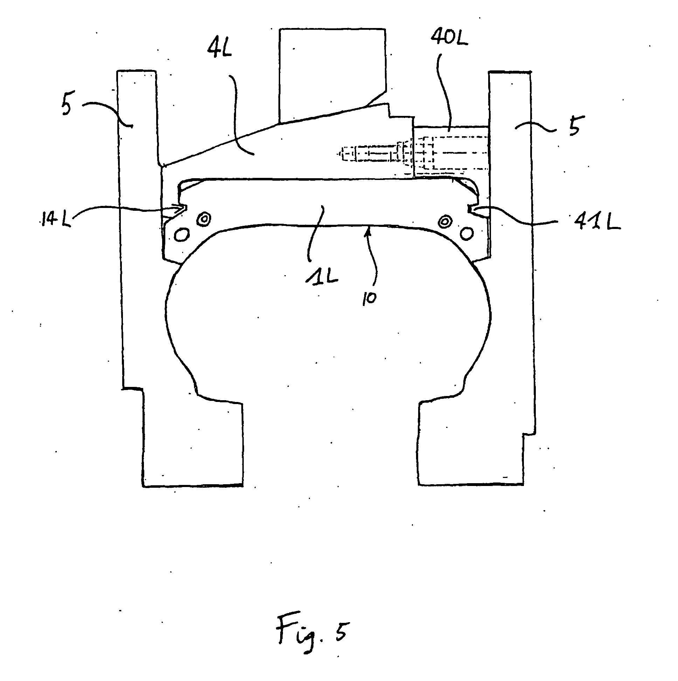

A la figure 5, on indique que l'invention n'est pas limitée à la catégorie de moule comportant deux parties (G et D) axialement, mais peut tout autant trouver intérêt à s'appliquer à une autre catégorie de moules, en une partie axialement. Dans ce cas, les éléments utilisés sont des tôles 1L dont la largeur correspond sensiblement à la largeur de la bande de roulement. Chaque secteur est monté sur un boîtier 4L formant aussi un support monobloc, pouvant aussi être une pièce standard commune à un grand nombre de sculptures différentes, de largeur adaptée. On fixe les tôles 1L grâce à des rainures 14L engagées sur des protubérances 41L aménagées d'un côté sur le boîtier 4L et de l'autre sur une bride 40L qui est vissée sur le boîtier 4L.

De nombreuses variantes de réalisation peuvent être envisagées pour maintenir les tôles 1 rassemblées par secteurs 11. Ainsi, aux boulons 2 montrés aux figures 1 à 4 où l'on voit que les têtes 21 et les écrous 20 font protubérance, on peut substituer (voir figure 6) des vis 2b dont les têtes 21b et les écrous 20b correspondant ont une allure tronconique et sont noyés dans l'épaisseur de chaque secteur, les têtes 21b et écrous 20b coopérant avec une portée tronconique 15b aménagée sur les tôles 1b installées aux bords de chaque secteur. Notons que dans la réalisation illustrant ce mémoire, deux tôles 1bb immédiatement adjacentes aux tôles 1b de bord de secteur comportent un perçage plus grand, permettant de loger au montage du moule une rondelle 17b permettant de reprendre les efforts de serrage et d'assurer l'alignement des tôles dans le secteur.

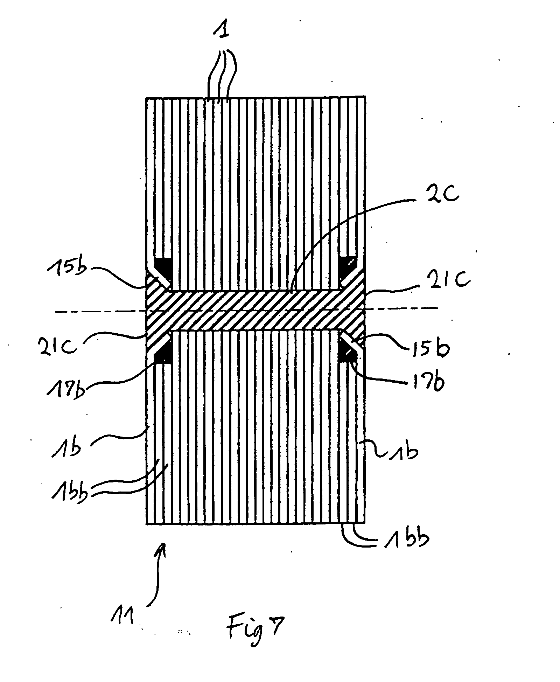

A la figure 7, on voit que les tôles 1 sont maintenues pressées entre elles par un insert de fixation 2c obtenu par injection de plastique ou toute autre matière convenable, les tôles étant pré-assemblées et maintenues provisoirement pendant la réalisation de l'insert 2c. Cet insert 2c comporte des têtes 21c ayant une allure tronconique. Lorsque la fabrication de l'insert 2c est achevée, les têtes 21c coopèrent avec une portée tronconique 15b aménagée sur les tôles 1b installées aux bords de chaque secteur, tout comme dans 1a variante précédente.

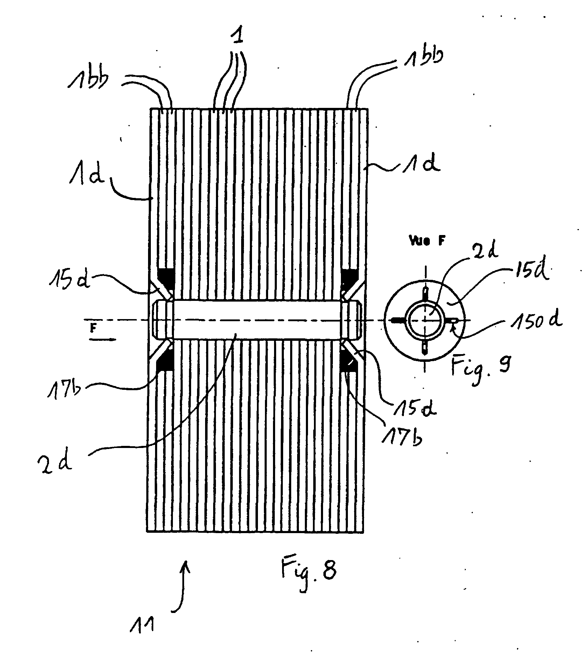

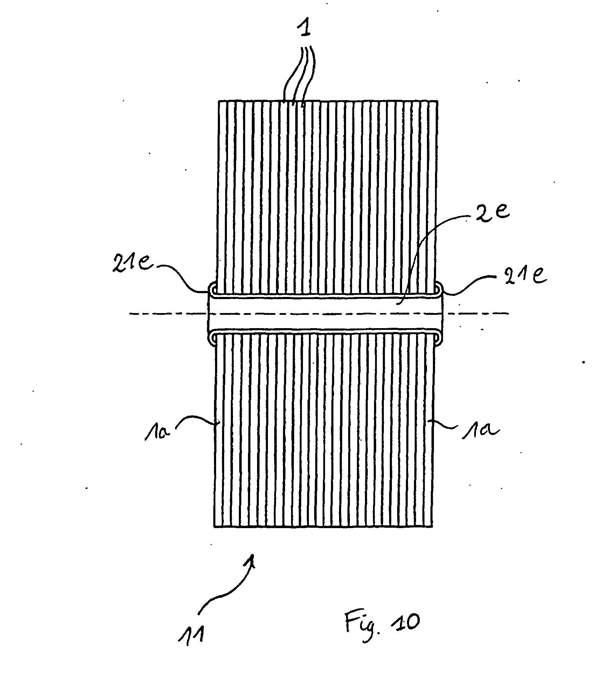

Aux figures 8 et 9, on voit que les tôles 1 sont maintenues pressées entre elles par un axe de fixation 2d comportant deux rainures 21d. Les tôles 1d installées aux bords de chaque secteur comporte une ou des portées tronconiques 15d comportant des fentes 150d leur conférant une certaine élasticité. Lors du montage de l'insert 2d, le bord des portées tronconiques 15d s'insère dans les rainures 21d, pour assurer la fonction de reprise les efforts de serrage.

A la figure 10, on voit que les tôles 1 sont maintenues pressées entre elles par un rivet 2e. Le insert 2e comporte des extrémités 21e s'appuyant sur la face latérale de chaque tôle la présente aux bords d'un secteur. Bien entendu, l'homme du métier aura compris que de nombreuses autres variantes de réalisation de la fonction de maintien entre elles des tôles d'un secteur peuvent être imaginées sans sortir du cadre de la présente invention.

L'invention permet de fabriquer des moules d'une façon qui se marie bien avec les techniques de conception et réalisations assistées par ordinateur, avec un délai de réalisation très court. Les moules ainsi réalisés sont très robustes ; ils s'accommodent très bien d'un grand nombre de cycles d'ouverture et de fermeture.

## Revendications

1. Moule pour bande de roulement de pneu, comportant une couronne périphérique feuilletée pour le moulage de l'extérieur de la bande de roulement, ladite couronne périphérique feuilletée comprenant un empilage dans la direction circonférentielle d'une pluralité d'éléments moulants (1) adjacents de faible épaisseur, lesdits éléments étant orientés sensiblement radialement, le moulage de ladite bande de roulement étant effectué par la tranche (10) radialement intérieure desdits éléments, ladite tranche radialement intérieure ayant le profil voulu pour mouler une sculpture sur la bande de roulement, **caractérisé en ce que** la couronne est divisée en secteurs (11) et **en ce que**, pour chaque secteur, les éléments appartenant à un secteur sont solidarisés entre eux pour former un bloc unitaire, chaque secteur pouvant être déplacé lors des mouvements d'ouverture et de fermeture du moule.

2. Moule selon la revendication 1, dans lequel les éléments appartenant à un secteur sont fixés sur un boîtier (4), chaque boîtier pouvant être déplacé lors des mouvements d'ouverture et de fermeture du moule.

3. Moule selon la revendication 1 ou 2, dans lequel la couronne est divisée en deux parties (G et D), en ce que la couronne comporte, transversalement, deux éléments distincts et adjacents appartenant chacun à l'une des parties.

4. Moule selon l'une des revendications 1 à 3, **caractérisé en ce que** chaque élément a une épaisseur comprise entre 0,1 mm et 5 mm, et **en ce que** l'extrémité côté tranche (10) de moulage desdits éléments présente une épaisseur progressivement décroissante en se déplaçant radialement vers l'axe du moule.

5. Moule selon la revendication 1, dans lequel le nombre d'éléments par secteur est compris entre 10 et 1000.

6. Moule selon l'une des revendications 1 à 4, dans lequel le nombre d'éléments est identique pour tous les secteurs.

7. Moule selon l'une des revendications 1 à 4, comprenant des secteurs rassemblant un nombre d'éléments différents.

8. Moule selon l'une des revendications 1 à 6, dans lequel les éléments d'un secteur sont pris en tenaille par un dispositif de fixation comportant deux têtes faisant protubérance et appuyant chacune sur le flanc libre de chacun des éléments au bord du secteur, les dispositifs de fixation étant disposés en alternance d'un secteur à l'autre, chaque secteur comportant des évidements permettant de loger la tête des dispositifs de fixation des secteurs adjacents lorsque les secteurs sont en contact pour former ladite couronne de moulage de la bande de roulement.

9. Moule selon l'une des revendications 1 à 6, comportant un nombre pair de secteurs.

10. Procédé de fabrication d'un pneu, **caractérisé en ce que** l'on utilise un moule selon l'une des revendications 1 à 4, dans lequel l'éventation du moule se fait grâce aux espaces entre éléments.

## Patentansprüche

1. Form für Reifenlaufstreifen, die einen mehrlagigen Umfangsring zum Abformen der Außenseite des Laufstreifens aufweist, wobei in dem mehrlagigen Umfangsring eine Vielzahl von einander benachbarten Formelementen (1) geringer Dicke in Umfangsrichtung aneinander gereiht vorliegt, die Elemente im Wesentlichen in radialer Richtung ausgerichtet sind, das Abformen des Laufstreifens durch das in radialer Richtung innen liegende Stück (10) der Elemente erfolgt und das in radialer Richtung innen liegende Stück das zum Abformen eines Profils auf dem Laufstreifen gewünschte Profil aufweist, **dadurch gekennzeichnet, dass** der Ring in Segmente (11) unterteilt ist und **dadurch**, dass die Elemente, die zu einem Segment gehören, innerhalb der Segmente jeweils fest miteinander verbunden sind und so einen Einheitsblock bilden, wobei die einzelnen Segmente bei den Bewegungen zum Öffnen und Schließen der Form bewegt werden können.

2. Form nach Anspruch 1, worin die Elemente, die zu einem Segment gehören, auf einem Bauteil (4) befestigt sind, wobei die einzelnen Bauteile bei den Bewegungen zum Öffnen und Schließen der Form bewegt werden können.

3. Form nach Anspruch 1 oder 2, worin der Ring in zwei Teile (G und D) geteilt ist, wobei der Ring in transversaler Richtung zwei verschiedene und benachbarte Elemente besitzt, die jeweils zu einem der Teile gehören.

4. Form nach einem der Ansprüche 1 bis 3, **dadurch gekennzeichnet, dass** die einzelnen Elemente eine Breite im Bereich von 0,1 bis 5 mm aufweisen und **dadurch**, dass das als Stück (10) zum Abformen bezeichnete Ende dieser Elemente eine Breite aufweist, die in radialer Richtung zur Achse der Form hin nach und nach abnimmt.

5. Form nach Anspruch 1, worin die Anzahl der Elemente pro Segment im Bereich von 10 bis 1 000 liegt.

6. Form nach einem der Ansprüche 1 bis 4, worin die Anzahl der Elemente in allen Segmenten identisch ist.

7. Form nach einem der Ansprüche 1 bis 4, die Segmente enthält, die eine unterschiedliche Anzahl von Elementen aufweisen.

8. Form nach einem der Ansprüche 1 bis 6, worin die Elemente eines Segments mit einer Haltevorrichtung gefasst werden, die zwei Köpfe aufweist, welche vorragen und sich jeweils an der freien Seite jedes der Elemente am Rand des Segments in Auflage befinden, wobei die Haltevorrichtungen von einem Segment zum nächsten im Wechsel angeordnet sind und wobei jedes Segment Ausnehmungen aufweist, die den Kopf der Haltevorrichtungen der benachbarten Segmente aufnehmen können, wenn die Segmente in Kontakt sind, um den Ring zum Abformen des Laufstreifens zu bilden.

9. Form nach einem der Ansprüche 1 bis 6, die ein gerade Zahl von Segmenten enthält.

10. Verfahren zur Herstellung eines Reifens, **dadurch gekennzeichnet, dass** eine Form nach einem der Ansprüche 1 bis 4 verwendet wird, worin die Entlüftung der Form durch die Zwischenräume zwischen den Elementen erfolgt.

## Claims

1. A mould for a tyre tread, having a laminated peripheral crown for moulding the outside of the tread, the said laminated peripheral crown comprising a stack in the circumferential direction of a plurality of thin moulding elements (1) adjacent to one another, the said elements being oriented substantially radially, moulding of the said tread being effected by the radially inner cut edge (10) of the said elements, the said radially inner cut edge having the desired profile for moulding a pattern on the tread, **characterised in that** the crown is divided into sectors (11) and **in that** for each sector the elements belonging to one sector are integrally joined to form a unitary block, each sector being capable of displacement during the movements of opening and closing the mould.

2. A mould according to Claim 1, in which the elements belonging to one sector may be fixed to a casing (4), each casing being capable of displacement during the movements of opening and closing the mould.

3. A mould according to Claim 1 or 2, in which the crown is divided into two parts (G and D) and in that the crown has, transversely, two distinct elements adjacent to one another and each belonging to one of the parts.

4. A mould according to one of Claims 1 to 3, **characterised in that** each element has a thickness between 0.1 mm and 5 mm, and **in that** the end on the moulding cut edge (10) side of the said elements has a progressively decreasing thickness in the direction radially towards the axis of the mould.

5. A mould according to Claim 1, in which the number of elements per sector is between 10 and 1,000.

6. A mould according to one of Claims 1 to 4, in which the number of elements is identical for all sectors.

7. A mould according to one of Claims 1 to 4, comprising sectors bringing together a different number of elements.

8. A mould according to one of Claims 1 to 6, in which the elements of a sector are grasped by a fixing device having two protruding heads, each bearing against the free side of each of the elements at the edge of the sector, the fixing devices being disposed alternately from one sector to the next, each sector having recesses allowing the head of the fixing devices of adjacent sectors to be housed when the sectors are in contact to form the said crown for moulding the tread.

9. A mould according to one of Claims 1 to 6, having an even number of sectors.

10. A method of manufacturing a tyre, **characterised in that** a mould according to one of Claims 1 to 4 is used, in which venting of the mould is effected as a result of spaces between elements.
